# EUROPÄISCHE PATENTSCHRIFT

(11) **EP 0 632 109 B1**
(45) Veröffentlichungstag und Bekanntmachung des Hinweises auf die Patenterteilung: **26.08.1998**
(21) Anmeldenummer: 94109608.3
(22) Anmeldetag: 22.06.1994
(51) Int. Cl.: C09C 1/00, C09C 3/08, C09C 3/12, C09D 7/12, C08K 9/04, C08K 9/06

(54) **Perlglanzpigment für Wasserlacksysteme**
Nacreous pigment for aqueous lacquering system
Pigment nacré pour système de laquage à l'eau

(30) Priorität: 24.06.1993 DE 4321005
(43) Veröffentlichungstag der Anmeldung: 04.01.1995
(73) Patentinhaber: MERCK PATENT GmbH, 64293 Darmstadt (DE)
(72) Erfinder: Duschek, Joachim, D-64319 Pfungstadt (DE); Glausch, Ralf, Dr., D-64297 Darmstadt (DE)

(56) Entgegenhaltungen:
- EP-A- 0 268 918
- EP-A- 0 342 533
- EP-A- 0 416 395

## Beschreibung

Die Erfindung betrifft oberflächenmodifizierte Perlglanzpigmente für Wasserlacksysteme.

Es ist bekannt, daß Titandioxidteilchen, die als Pigmentkomponente in einem Lack enthalten sind, eine oxidative Zersetzung des Polymeren bei Einwirkung von ultravioletten Strahlen und Feuchtigkeit verursachen, die als "Weißwerden" bezeichnet wird. Um diese Wirkung des Titandioxids zu unterdrücken, ist vorgeschlagen worden, Titandioxid mit Chrom-, Silicium-, Aluminium-, Zink-, Phosphor- oder Zirkoniumverbindungen zu beschichten oder zu dopen.

Die EP-A-0 268 918 beschreibt ein wetterbeständiges Perlglanzpigment mit einer hydratisierten Zirkoniumoxidbeschichtung auf dem Titandioxid-Basispigment, die durch Hydrolyse eines Zirkoniumsalzes in Gegenwart eines Hypophosphits erhalten wird.

Die EP-A-0 342 533 beschreibt ein wetterbeständiges Perlglanzpigment mit einer Deckschicht auf dem Titandioxid-Basispigment, die aus hydratisiertem Zirkoniumoxid, das durch Hydrolyse in Gegenwart eines Hypophosphits erhalten wurde und einem hydratisiertem Metalloxid besteht. Das Metalloxid kann dabei Kobalt-, Mangan- oder Ceroxid sein.

Diese modifizierten Perlglanzpigmente besitzen eine ausreichende Dispergierbarkeit und Wetterbeständigkeit in nicht wäßrigen Lacksystemen. Für eine Verwendung in wasserverdünnbaren Lacksystemen sind sie aber nicht geeignet, da sie die Bildung mikrofeiner Bläschen im Lackfilm verursachen, die die Lichtstreuung wesentlich erhöhen und damit Glanz und Farbe nachteilig beeinflussen. Außerdem wird die Abbildungsklarheit (DOI) stark vermindert und das Regenerationsvermögen der Lackschicht verschlechtert.

Aus einer Firmenschrift der Hüls AG "Dynasylan®-Anwendungen von organofunktionellen Silanen" sind Silane als Haftvermittler zwischen anorganischen Materialien (Glas, Mineralien, Metall) und organischen Polymeren (Duroplaste, Thermoplaste, Elastomere) bekannt. In einem Verbundmaterial aus anorganischem Substrat und Polymer bewirken sie eine Haftverbesserung und damit eine Erhöhung der mechanischen Eigenschaften und gleichzeitig als Oberflächenmodifizierungsmittel eine Hydrophobierung der Oberfläche des Substrates und damit eine bessere Benetzung durch den Kunststoff.

Die organofunktionellen Silane besitzen folgende Grundstruktur

Y-(CH₂)ₙ-SiX₃,

wobei Y eine organofunktionelle Gruppe, beispielsweise eine NH₂-Gruppe ist, die über eine Kohlenstoffkette fest an das Silicium gebunden ist. X wird als siliciumfunktionelle Gruppe bezeichnet. Es handelt sich hierbei im allgemeinen um Alkoxygruppen, die nach ihrer Hydrolyse mit aktiven Stellen eines anorganischen Substrats oder durch Kondensation mit anderen Silicumverbindungen reagieren und so stabile Bindungen aufbauen.

Versuche, mit Hilfe dieser organofunktionellen Silane die Oberfläche von Perlglanzpigmenten zu modifzieren, um ihre Wetterbeständigkeit zu verbessern und sie für wasserverdünnbare Lacksysteme einsetzen zu können, führten zu unbefriedigenden Ergebnissen. Die Festigkeit des Silans an der Oberfläche des Substrates ist begrenzt. Durch mechanische Beanspruchung oder Witterungseinflüsse, wie sie beispielsweise bei einem Autolack auftreten, wird die Bindung gelöst. Weiterhin ist nachteilig, daß die Bedeckung der Substratoberfläche durch das Silan nicht vollständig ist.

Es ist deshalb die Aufgabe der vorliegenden Erfindung, ein Perlglanzpigment mit ausgezeichneter Wetterbeständigkeit, das für verschiedene, chemisch unterschiedliche, wasserverdünnbare Lacksysteme geeignet ist, bereitzustellen.

Diese Aufgabe wird gemäß der vorliegenden Erfindung gelöst durch ein Perlglanzpigment gemäß Anspruch 1.

Weiterhin wird die Aufgabe der vorliegenden Erfindung gemäß Anspruch 3 durch ein Verfahren zur Herstellung eines Perlglanzpigmentes nach Anspruch 1 auf der Basis eines mit Metalloxiden beschichteten, plättchenförmigen Substrates und auf einer auf der Metalloxidschicht befindlichen Deckschicht gelöst, indem man das mit Metalloxiden beschichtete Substrat in Wasser suspendiert, in einer ersten Stufe durch Zusatz eines wasserlöslichen Silicats im Bereich von pH 6 bis 9 Kieselsäure abscheidet, anschließend in einer zweiten Stufe nach Zusatz eines oder mehrerer wasserlöslicher Metallsalze im pH-Bereich von 3 bis 7 und Erhitzen auf 30 bis 100 °C, vorzugsweise 40 bis 75 °C, die Metallhydroxide bzw. Metälloxidhydrate zum Teil abscheidet, in einer dritten Stufe mindestens ein Kupplungsreagenz zusetzt und dieses bei einem pH-Wert im Bereich von 3 bis 4 hydrolysiert und schließlich in einer vierten Stufe bei einem pH-Wert von 4 bis 8,5 den noch in Lösung verbliebenen Teil der Metalle als Hydroxide bzw. Oxidhydrate zusammen mit dem Kupplungsreagenz abscheidet und anschließend das Pigment bei 80 bis 160 °C, vorzugsweise bei 120 bis 160 °C, trocknet.

Gegenstand der Erfindung ist weiterhin nach Anspruch 6 die Verwendung der erfindungsgemäßen Pigmente zur Pigmentierung von Lacken, Farben Kunststoffen und Coatings, sowie Lache, Farben, Kunststoffe und Coatings, die mit einem erfindungsgemäßen Perlglanzpigment pigmentiert sind (Anspruch 7). Zweckmäßige Ausgestaltungen sind in den Unteransprüchen 2,4 und 5 enthalten.

Als Substrat werden Pigmente verwendet, die aus einem plättchenförmigen Material, beispielsweise Glimmer, Kaolin oder Glas und einer oder mehrerer darauf abgeschiedener Metalloxidschichten bestehen. Die Metalloxidschicht kann beispielsweise aus Titandioxid, Titandioxid im Gemisch mit Eisen(III)oxid, Eisen(III)oxid, Chromoxid, Zirkondioxid, Zinndioxid oder Zinkoxid bestehen. Derartige Pigmente sind im Handel unter der Bezeichnung Iriodin® (Hersteller: E. MERCK, Darmstadt) erhältlich.

Der Anteil der Deckschicht am gesamten Pigment beträgt 4 bis 20 Gew.-%, bevorzugt 4 bis 10 Gew.-%. Davon entfallen 1 bis 3 Gew.-% auf Siliciumdioxid, 1 bis 5 Gew.-% auf weitere Metalloxide und 2 bis 12 % auf das Kupplungsreagenz.

Neben Siliciumdioxid sind als weitere Metalloxide Aluminiumoxid, Cer(III)oxid und Zirkondioxid in der Deckschicht enthalten.

Die verwendeten Kupplungsreagenzien sind Verbindungen, die aus einem oder mehreren Zentralatomen, sowie daran gebundener hydrolysierbarer Gruppen und einem oder mehreren organischen Resten, die funktionelle Gruppen tragen, bestehen. Die Zentralatome können dabei Silicium, Aluminium, Zirkon oder Titan sein.

Geeignete Kupplungsreagenzien sind Zirkonaluminate der folgenden Struktur 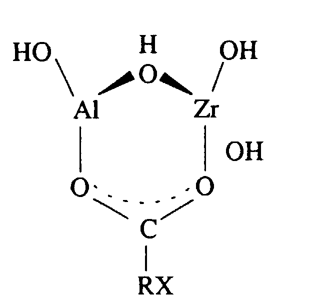 worin X = -NH₂, -COOH, -COO', Hydroxyphenyl-, Methacryl-, Carboxyphenyl-, Alkyl-, Mercapto-, Phenyl-, -H, Vinyl-, Styryl-, Melamin-, Epoxy- oder Aryl- und R = (CH₂)ₙ- ist, wobei n = 0 bis 12 sein kann.

Besonders geeignet sind Zirkonaluminate mit folgenden funktionellen Gruppen 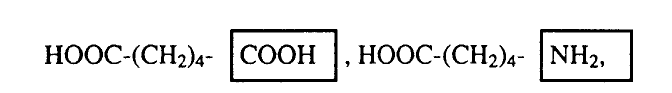 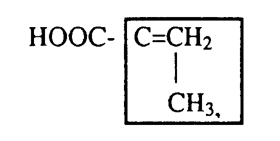 die unter dem Handelsnamen MANCHEM® (Hersteller: Manchem Limited, Großbritannien) kommerziell verfügbar sind.

Weiterhin sind als Kupplungsreagenzien Metallsäureester der folgenden Struktur geeignet

(RO)ₘ-M-(O-CO-R'X)₁₋ₘ

(RO)ₘ-M-(OR'X)₁₋ₘ,

worin R = -H, -C=O, Alkyl- oder Aryl-; R' = -O⁺,-O, -S⁺, -S, oder -ester; X = H oder ein Metallion; M = Zr, Ti und m = 1-3 ist.

Besonders geeignete Metallsäureester sind acrylatfunktionelle und methacrylamidfunktionelle Titanate sowie methacrylamidfunktionelle Zirkonate.

Schließlich können erfindungsgemäß organofunktionelle Silane als Kupplungsreagenzien eingesetzt werden, wobei die folgenden Verbindungen besonders geeignet sind
Aminopropyltrimethoxysilan (Dynasilan AMMO)
N2-Aminoethyl-3-aminopropyltrimethoxysilan (Dynasilan DAMO)
3-Methacryl-oxypropyltrimethoxysilan (Dynasilan MEMO)
3-Glycidoxypropyltrimethoxysilan (Dynasilan GLYMO),
die von der Hüls AG vertrieben werden.

Aufgabe der siliciumfunktionellen Gruppe (Methoxygruppe) ist es, nach Hydrolyse Wasserstoffbrückenbindungen und chemische Bindungen zu den OH-Gruppen der Pigmentoberfläche auzubilden. Dadurch wird ein stabiler Verbund zwischen Silan und Pigmentoberfläche aufgebaut.

Die organofunktionelle Gruppe des Silans hat die Aufgabe, Bindungen zum Polymer des Wasserlackes herzustellen. Dabei obliegt es dem Fachmann, passend zum Polymer des Wasserlackes das geeignete, mit dem Kupplungsreagenz modifizierte Pigment auszuwählen. Wird Polyester als Polymer im Wasserlacksystem verwendet, dann sollte das Pigment mit einem Kupplungsreagenz modifiziert werden, das eine Methacrylgruppe als organofunktionelle Gruppe enthält. Bei der Verwendung von Urethan als Polymer sollte ein aminofunktionelles Kupplungsreagenz zur Modifizierung des Pigmentes eingesetzt werden.

Durch entsprechende Auswahl der Kupplungsreagenzien können somit die erfindungsgemäßen Pigmente an die verschiedenen Wasserlacksysteme angepaßt werden.

Die erfindungsgemäßen Pigmente werden hergestellt, indem auf die Metalloxidschicht des Substrates (Basispigment) in einer ersten Stufe 0,1 bis 10 Gew.-%, vorzugsweise 0,5 bis 3 Gew.-%, Siliciumdioxid abgeschieden werden. Dazu wird eine wäßrige, 1 bis 35%ige, vorzugsweise 5 bis 20%ige, Suspension des Basispigmentes im pH-Bereich von 6 bis 9 mit einer verdünnten Natriumsilicatlösung versetzt. Der pH-Wert wird durch Zusatz von Salzsäure konstant gehalten, wobei alle angegebenen pH-Werte mit Hilfe von Indikatorpapier bestimmt werden.

In einer zweiten Stufe werden nach Einstellung des pH-Wertes auf einen Bereich von 3 bis 5, wäßrige Salzlösungen oder feste Salze der Metalle Cer, Aluminium oder Zirkon oder deren Gemische in einer Konzentration von 1 bis 4 Gew.-%, bezogen auf Oxid, in Gegenwart eines löslichen Sulfates zu einer wäßrigen Suspension des in Stufe 1 beschichteten Substrats zugegeben, der pH-Wert im Bereich 3 bis 5 konstant gehalten und die Suspension auf 30 bis 100 °C, vorzugsweise 40 bis 75 °C, unter Rühren für 5 min bis 4 Stunden, vorzugsweise 30 min bis 2 Stunden, erhitzt.

Unter diesen Bedingungen wird nur ein Teil, maximal 50 % der Metallionen als Hydroxide oder Oxidhydrate ausgefällt.

In einer dritten Stufe werden dann 1 bis 20 Gew.-%, vorzugsweise 2 bis 12 Gew.-%, Kupplungsreagenz bezogen auf das eingesetzte Pigment zugegeben, die Suspension 5 min bis 4 Stunden, vorzugsweise 30 min bis 2 Stunden, bei einem pH-Wert von 3 bis 5 gerührt und dann innerhalb von 5 min bis 4 Stunden, vorzugsweise 30 min bis 2 Stunden, der pH-Wert auf einen Bereich von 5 bis 8 eingestellt, wobei die Suspension bei einer Temperatur von 30 bis 100 °C, vorzugsweise 40 bis 75 °C gehalten wird.

Unter diesen Bedingungen erfolgt eine vollständige Mischfällung der restlichen Metallionen als Hydroxide oder Oxidhydrate zusammen mit dem Kupplungsreagenz.

Anschließend wird das Pigment abgetrennt, salzfrei gewaschen und bei 80 bis 180 °C, vorzugsweise 120 bis 160 °C, getrocknet.

Die so erhaltenen farbneutralen Pigmente zeigen eine sehr gute Wetterbeständigkeit, was durch die nachfolgend aufgeführten Testergebnisse belegt wird. Das Pigment ist einerseits gut rieselfähig und besitzt andererseits eine sehr gute Eignung bezüglich Dispergierbarkeit, Stabilität, Coloristik, Microblasenbildung, Quellung und Glanz für wasserverdünnbare Lacksysteme, insbesondere Autolacksysteme.

Nach den folgenden 3 Prüfmethoden wurden die erfindungsgemäßen Pigmente getestet:

### Photoaktivität

Die Pigmentproben wurden in eine Kunststoffmatrix eingearbeitet und der Umfang der Reduktion von Pb²⁺ zu Pb visuell bestimmt. Die Beurteilung der Graufärbung erfolgt nach ISO 105-Part A 02 (entspricht DIN 54 001). Die Prüfskala reicht von 5 (sehr gut) bis 1 (sehr schlecht).

### Wasser-Immersionstest

Die Pigmentproben wurden in ein konventionelles Lacksystem eingearbeitet und die Prüfproben per Spritzapplikation hergestellt. Die Prüfung erfolgte im Einschichtsystem nach 16 Stunden bei 66 °C und nach 20 Stunden bei 80 °C. Die visuelle Beurteilung der Graufärbung erfolgte nach ISO 105 Part A 02 (entspricht DIN 54 001) 24 Stunden nach Belastungsende. Die Beurteilungsskala reicht von 5 (sehr gut) bis 1 (sehr schlecht).

### Kondenswasserprüfung

Die Pigmentproben wurden in drei verschiedene Wasserlacksysteme (A, B, C) eingearbeitet und die Prüfproben per Spritzapplikation hergestellt.

Die Prüfung erfolgte nach DIN 50 017 (Kondenswasser-Konstantklimate) eine Stunde nach Belastungsende.

Die Beurteilung des Blasengrades erfolgte visuell nach DIN 53 209. "m" bedeutet Häufigkeit der Blasen je Flächeneinheit und "g" bedeutet Größe der Blasen. Die Bewertungsskala reicht von 0 (sehr gut) bis 5 (sehr schlecht), demnach umgekehrt zu den beiden vorangehenden Prüfmethoden.

Die Beurteilung des Quellungsvorganges erfolgte visuell in Anlehnung an DIN 53 230, Tabelle 2. In der relativen Bewertungsskala bedeutet die Kennzahl 0: "nicht verändert" und die Kennzahl 5: "sehr stark verändert".

Tabelle 1 enthält die Testergebnisse für die nach den Beispielen 1 bis 20 hergestellten Pigmente nach den oben beschriebenen Prüfmethoden.

Die am Ende aufgeführte Nullprobe bestand aus den reinen Wasserlacksystemen ohne Pigment. Die Nullprobe zeigt, daß auch die reinen Wasserlacksysteme geringe Quellungen aufweisen.

**Tabelle 1**

| **Testergebnisse für die nach den Beispielen 1 bis 20 hergestellten Pigmente** | | | | | | | | | |
|---|---|---|---|---|---|---|---|---|---|
| Beispiel | Photoaktivität | Wasserimmersionstest | | Kondenswasserprüfung von wasserverdünnbaren Lacksystemen | | | | | |
| | | 16h/66°C | 20h/80°C | A | | B | | C | |
| | | | | Blasen | Quellung | Blasen | Quellung | Blasen | Quellung |
| 1 | 5 | 5 | 4-5 | m 0/g 0 | Q 0 | / | / | / | / |
| 2 | 3-4 | 4-5 | 3-4 | m 0/g 0 | Q 0 | m 0/g 0 | Q 3 | m 2/g 1 | Q 2-3 |
| 3 | 3-4 | 4-5 | 3-4 | / | / | m 0/g 0 | Q 2 | / | / |
| 4 | 3-4 | 4-5 | 4-5 | m 1/ g 1 | Q 1 | m 0/g 0 | Q 3-4 | m 1/g 2 | Q 2-3 |
| 5 | 34 | 4-5 | 4 | m 3/g 1 | Q 0-1 | m 0/g 0 | Q 2-3 | m 0g0 | Q 3 |
| 6 | 3-4 | 5 | 3-4 | 1 | 1 | / | / | m 4/g 1 | Q 2 |
| 7 | 3-4 | 5 | 4 | / | / | / | / | / | / |
| 8 | 3-4 | 5 | 3-4 | / | / | / | / | / | / |
| 9 | 3-4 | 5 | 4 | 1 | / | m 0/g 0 | Q 1 | m 0/g 0 | Q 3-4 |
| 10 | 3-4 | 5 | 4 | m 0/g 0 | Q 0-1 | m 0/g 0 | Q 1-2 | m 0/g 0 | Q 3-4 |
| 11 | 3-4 | 5 | 4 | m 0/g 0 | Q 0-1 | m 0/g 0 | Q 1-2 | m 0/g 0 | Q 3-4 |
| 12 | 3-4 | 5 | 4 | / | / | m 0/g 0 | Q 2 | / | / |
| 13 | 3-4 | 5 | 4 | m 2/g 1 | Q 0-1 | m 0/g 0 | Q 1-2 | m 0/g 0 | Q 3-4 |
| 14 | 5 | 5 | 4-5 | / | / | / | / | / | / |
| 15 | 5 | 5 | 4-5 | / | / | / | / | / | / |
| 16 | 3-4 | 5 | 3 | / | / | / | / | / | / |
| 17 | 3-4 | 4-5 | 3 | / | / | / | / | / | / |
| 18 | 3-4 | 4-5 | 3-4 | / | / | / | / | / | / |
| 19 | 3-4 | 4-5 | 3-4 | / | / | / | / | / | / |
| 20 | 3-4 | 4-5 | 3 | / | / | / | / | / | / |
| Nullprobe | / | / | / | m 0/g 0 bis m 1-2/ gl | Q 0 bis Q 1 | m 0/g 0 bis m 1/g 2 | Q 0-1 bis Q 1 | m 0/g 0 | Q 2-3 |

Tabelle 2 enthält zum Vergleich die Testergebnisse für die in den Vergleichsbeispielen 1 bis 4 verwendeten konventionellen Pigmente.

In den Vergleichsbeispielen 1 und 2 wurde Iriodin® 9225 Rutil Perlblau, ein mit Titandioxid beschichtetes Glimmerpigment, eingesetzt. In Vergleichsbeispiel 2 war es mit einer zusätzlichen Beschichtung aus Chrom- und Manganverbindungen gemäß EP 0 104 516 und in Vergleichsbeispiel 1 mit einer zusätzlichen Beschichtung aus Zirkonoxidhydrat, Ceroxidhydrat und einem Epoxysilan gemäß EP 0 342 533 versehen.

In den Vergleichsbeispielen 3 und 4 wurde Iriodin® 9504 Rot, ein mit Eisen(III)oxid beschichtetes Glimmerpigment, verwendet. In Vergleichsbeispiel 3 war es mit einer zusätzlichen Beschichtung gemäß EP 0 342 533 und in Vergleichsbeispiel 4 mit einer zusätzlichen Beschichtung gemäß EP 0 104 516 versehen.

**Tabelle 2**

| **Testergebnisse für die in den Vergleichsbeispielen 1 bis 4 verwendeten konventionellen Pigmente** | | | | | | | | | |
|---|---|---|---|---|---|---|---|---|---|
| Vergleichsbeispiel | Photoaktivität | Wasserinversionstest | | Kondenswasserprüfung von wasserverdünnbaren Lacksystemen | | | | | |
| | | 16h/66°C | 20h/80°C | A | | B | | C | |
| | | | | Blasen | Quellung | Blasen | Quellung | Blasen | Quellung |
| 1 | 3-4 | 3-4 | / | m 0/g 0 bis m 3/g 1 | Q 0 bis Q1 | m 0/g 0 | Q 3 bis Q 3-4 | Q 4 | m 0/g 0 |
| 2 | 3 | 4-5 | / | m 0/g 0 bis m 4-5/g 1 | Q 0 bis Q 1-2 | m 0/g 0 | Q 3-4 bis Q 4 | m g/ g 1 | Q 4-5 |
| 3 | 5 | 4-5 | 4 | m 0/g 0 bis m 3/g 1 | Q 1 | m 0/g 0 | Q 3-4 bis Q 4 | m 0/g 0 | Q 3 |
| 4 | 5 | 4-5 | / | m 0/g 0 | Q 1-2 bis Q 3 | m 0/g 0 bis m 1/g 2 | Q 3-4 bis Q 5 | m 0/g 0 | Q 3-4 |
| Nullprobe | / | / | / | m 0/g 0 bis m 1-2/g 1 | Q 0 bis Q 1 | m 0/g 0 bis m 1/g 2 | Q 0-1 bis Q 1 | m 0/g 0 | Q 2-3 |

Die Vergleichsbeispiele zeigen, daß die Lacksysteme mit den erfindungsgemäßen Pigmenten bezüglich des Quellungsverhaltens deutlich besser sind als die Lacksysteme mit den konventionellen Pigmenten (siehe Wasserlacksystem B, Beispiele 10, 11 und 13).

Die nachfolgenden Beispiele sollen die Erfindung erläutern, ohne sie zu begrenzen.

### Beispiel 1

100 g Iriodin® 504 Rot (mit Eisen(III)oxid beschichtetes Glimmerpigment der E. Merck, Darmstadt) werden in 900 ml vollentsalztem Wasser suspendiert und unter kräftigem Rühren auf 40 °C aufgeheizt.

Mit 2,5%iger Natronlauge wird ein pH-Wert von 9,0 eingestellt. Alle angegebenen pH-Werte werden mit Hilfe von geeignetem pH-Indikatorpapier bestimmt.

Anschließend läßt man innerhalb von 30 min eine Lösung von 2,7 ml Natronwasserglas (370 g SiO₂ pro Liter) in 150 ml vollentsalztes Wasser zur Pigmentsuspension tropfen. Der pH-Wert wird dabei mit 2,5%iger Salzsäure konstant gehalten. Nach beendeter Zugabe wird 15 min bei 40 °C nachgerührt. Anschließend wird innerhalb 10 min mit 2,5%iger Salzsäure auf pH 6,5 eingestellt und 15 min bei 40 °C nachgerührt. Nun werden 1,35 g Natriumsulfat, 2,30 g Aluminiumchlorid-Hexahydrat und 1,10 g Cer(III)chlorid-Heptahydrat als Feststoffe in die Pigmentsuspension zugegeben, wobei der pH-Wert auf 4,0 abfällt.

Anschließend wird innerhalb ca. 20 min auf 75 °C aufgeheizt, und weitere 75 min bei 75 °C gerührt, wobei der pH-Wert auf 3,3 abfällt. Dabei werden die Metallhydroxide bzw. Metalloxidhydrate, wenigstens zum Teil, abgeschieden.

Nun werden 3,0 g Dynasilan AMMO (3-Aminopropyltrimethoxysilan der Hüls AG, Troisdorf) pur, innerhalb 10 min zugegeben. Der pH-Wert 3,3 wird dabei durch 2,5%ige Salzsäure konstant gehalten. Nach beendeter Zugabe wird 2 h bei 75 °C nachgerührt. Dabei wird das Silan vollständig hydrolysiert und reaktionsfähig. Der pH-Wert ändert sich dabei nicht.

Anschließend wird mit 2,5%iger Natronlauge, sehr langsam, innerhalb 60 min auf pH 8,0 eingestellt. Dabei werden die Metallhydroxide bzw. Metalloxidhydrate und das Silan vollständig als Mischfällung abgeschieden.

Anschließend wird noch 1 h zur Nachreaktion bei 75 °C weitergerührt, wobei der pH-Wert auf ca. 7,0 abfällt.

Anschließend wird das Produkt über eine Filternutsche abgesaugt, mit vollentsalztem Wasser salzfrei gewaschen und ca. 16 h bei 140 °C getrocknet.

### Beispiel 2

100 g Iriodin® 225 Rutil Perlblau (mit Titandioxid beschichtetes Glimmerpigment der E. Merck, Darmstadt) werden in 900 ml vollentsalztem Wasser suspendiert und unter kräftigem Rühren auf 40 °C aufgeheizt. Bis zur Zugabe der Kupplungsreagentien wird gemäß Beispiel 1 weitergearbeitet.

Dann werden 3,0 g Dynasilan AMMO (3-Aminopropyltrimethoxysilan der Hüls AG, Troisdorf) pur, innerhalb 10 min zugegeben. Der pH-Wert 3,3 wird dabei durch 2,5%ige Salzsäure konstant gehalten.

Weiterhin werden 5,0 g Z 6040 (3-Glycidoxypropyltrimethoxysilan der Dow Corning Chemicals) pur, innerhalb 10 min zugegeben. Der pH-Wert 3,3 bleibt dabei konstant.

Anschließend werden 13,2 g Manchem C (Carboxy-Zirkonaluminat-Lösung der Rhône-Poulenc Chemicals) pur, innerhalb 10 min zugegeben. Der pH-Wert 3,3 wird dabei durch 2,5%ige Salzsäure konstant gehalten. Nach beendeter Zugabe wird 2 h bei 75 °C nachgerührt. Dabei werden die Silane und das Zirkon-Aluminat-Kupplungsreagenz vollständig hydrolysiert und reaktionsfähig. Der pH-Wert ändert sich dabei nicht.

Anschließend wird mit 2,5%iger Natronlauge, sehr langsam, innerhalb 90 min auf pH 8,0 eingestellt. Dabei werden die Metallhydroxide bzw. Metalloxidhydrate, die Silane mit unterschiedlicher Funktionalität und das Zirkon-Aluminat vollständig als Mischfällung abgeschieden.

Anschließend wird noch 1 h zur Nachreaktion bei 75 °C weitergerührt, wobei der pH-Wert auf ca. 7,0 abfällt.

Anschließend wird das Produkt über eine Filternutsche abgesaugt, mit vollentsalztem Wasser salzfrei gewaschen und ca. 16 h bei 140 °C getrocknet.

### Beispiel 3

100 g Iriodin® 225 Rutil Perlblau (mit Titandioxid beschichtetes Glimmerpigment der E. Merck, Darmstadt) werden in 900 ml vollentsalztem Wasser suspendiert und unter kräftigem Rühren auf 40 °C aufgeheizt. Bis zur Zugabe der Kupplungsreagentien wird gemäß Beispiel 1 weitergearbeitet.

Dann werden 3,0 g Dynasilan MEMO (3-Methacryloxypropyltrimethoxysilan der Hüls AG, Troisdorf) pur, innerhalb 10 min zugegeben. Der pH-Wert 3,3 bleibt dabei konstant.

Weiterhin werden 5,0 g Z 6040 (3-Glycidoxypropyltrimethoxysilan der Dow Corning Chemicals) pur, innerhalb 10 min zugegeben. Der pH-Wert 3,3 bleibt dabei konstant.

Anschließend werden 13,2 g Manchem C (Carboxy-Zirkonaluminat-Lösung der Rhône-Poulenc Chemicals) pur, innerhalb 10 min zugegeben.

Der pH-Wert 3,3 wird dabei durch 2,5%ige Salzsäure konstant gehalten. Nach beendeter Zugabe wird 2 h bei 75 °C nachgerührt. Dabei werden die Silane und das Zirkon-Aluminat-Kupplungsreagenz vollständig hydrolysiert und reaktionsfähig. Der pH-Wert ändert sich dabei nicht.

Anschließend wird mit 2,5%iger Natronlauge, sehr langsam, innerhalb 90 min auf pH 8,0 eingestellt. Dabei werden die Metallhydroxide bzw. Metalloxidhydrate, die Silane mit unterschiedlicher Funktionalität und das Zirkon-Aluminat vollständig als Mischfällung abgeschieden.

Anschließend wird noch 1 h zur Nachreaktion bei 75 °C weitergerührt, wobei der pH-Wert auf ca. 7,0 abfällt.

Anschließend wird das Produkt über eine Filternutsche abgesaugt, mit vollentsalztem Wasser salzfrei gewaschen und ca. 16 h bei 140 °C getrocknet.

### Beispiel 4

100 g Iriodin® 225 Rutil Perlblau (mit Titandioxid beschichtetes Glimmerpigment der E. Merck, Darmstadt) werden in 900 ml vollentsalztem Wasser suspendiert und unter kräftigem Rühren auf 40 °C aufgeheizt. Bis zur Zugabe der Kupplungsreagentien wird gemäß Beispiel 1 weitergearbeitet.

Dann werden 3,5 g Z 6020 (N2-Aminoethyl-3-aminopropyltrimethoxysilan der Dow Corning Chemicals) pur, innerhalb 10 min zugegeben. Der pH-Wert 3,3 wird dabei durch 2,5%ige Salzsäure konstant gehalten.

Weiterhin werden 3,0 g Dynasilan MEMO (3-Methacryloxypropyltrimethoxysilan der Hüls AG, Troisdorf) pur, innerhalb 10 min zugegeben. Der pH-Wert 3,3 bleibt dabei konstant.

Anschließend werden 13,2 g Manchem C (Carboxy-Zirkonaluminat-Lösung der Rhône-Poulenc Chemicals) pur, innerhalb 10 min zugegeben. Der pH-Wert 3,3 wird dabei durch 2,5%ige Salzsäure konstant gehalten. Nach beendeter Zugabe wird 2 h bei 75 °C nachgerührt. Dabei werden die Silane und das Zirkon-Aluminat-Kupplungsreagenz vollständig hydrolysiert und reaktionsfähig. Der pH-Wert ändert sich dabei nicht.

Anschließend wird mit 2,5%iger Natronlauge, sehr langsam, innerhalb 90 min auf pH 8,0 eingestellt. Dabei werden die Metallhydroxide bzw. Metalloxidhydrate, die Silane mit unterschiedlicher Funktionalität und das Zirkon-Aluminat vollständig als Mischfällung abgeschieden.

Anschließend wird noch 1 h zur Nachreaktion bei 75 °C weitergerührt, wobei der pH-Wert auf ca. 7,0 abfällt.

Anschließend wird das Produkt über eine Filternutsche abgesaugt, mit vollentsalztem Wasser salzfrei gewaschen und ca. 16 h bei 140 °C getrocknet.

### Beispiel 5

100 g Iriodin® 225 Rutil Perlblau (mit Titandioxid beschichtetes Glimmerpigment der E. Merck, Darmstadt) werden in 900 ml vollentsalztem Wasser suspendiert und unter kräftigem Rühren auf 40 °C aufgeheizt. Bis zur Zugabe der Kupplungsreagentien wird gemäß Beispiel 1 weitergearbeitet.

Dann werden 3,0 g Z 6040 (3-Glycidoxypropyltrimethoxysilan der Dow Corning Chemicals) pur, innerhalb 10 min zugegeben. Der pH-Wert 3,3 bleibt dabei konstant.

Anschließend werden 13,2 g Manchem C (Carboxy-Zirkonaluminat-Lösung der Rhône-Poulenc Chemicals) pur, innerhalb 10 min zugegeben. Der pH-Wert 3,3 wird dabei durch 2,5%ige Salzsäure konstant gehalten.

Nach beendeter Zugabe wird 2 h bei 75 °C nachgerührt. Dabei wird das Silan und das Zirkon-Aluminat-Kupplungsreagenz vollständig hydrolysiert und reaktionsfähig. Der pH-Wert ändert sich dabei nicht.

Anschließend wird mit 2,5%iger Natronlauge, sehr langsam, innerhalb 90 min auf pH 8,0 eingestellt. Dabei werden die Metallhydroxide bzw. Metalloxidhydrate, das Silan und das Zirkon-Aluminat vollständig als Mischfällung abgeschieden.

Anschließend wird noch 1 h zur Nachreaktion bei 75 °C weitergerührt, wobei der pH-Wert auf ca. 7,0 abfällt.

Anschließend wird das Produkt über eine Filternutsche abgesaugt, mit vollentsalztem Wasser salzfrei gewaschen und ca. 16 h bei 140 °C getrocknet.

### Beispiel 6

100 g Iriodin® 225 Rutil Perlblau (mit Titandioxid beschichtetes Glimmerpigment der E. Merck, Darmstadt) werden in 900 ml vollentsalztem Wasser suspendiert und unter kräftigem Rühren auf 40 °C aufgeheizt. Bis zur Zugabe der Kupplungsreagentien wird gemäß Beispiel 1 weitergearbeitet.

Dann werden 13,2 g Manchem C (Carboxy-Zirkonaluminat-Lösung der Rhône-Poulenc Chemicals) pur, innerhalb 10 min zugegeben. Der pH-Wert 3,3 wird dabei durch 2,5%ige Salzsäure konstant gehalten.

Nach beendeter Zugabe wird 2 h bei 75 °C nachgerührt. Dabei wird das Zirkon-Aluminat-Kupplungsreagenz vollständig hydrolysiert und reaktionsfähig. Der pH-Wert ändert sich dabei nicht.

Anschließend wird mit 2,5%iger Natronlauge, sehr langsam, innerhalb 90 min auf pH 8,0 eingestellt. Dabei werden die Metallhydroxide bzw. Metalloxidhydrate und das Zirkon-Aluminat vollständig als Mischfällung abgeschieden.

Anschließend wird noch 1 h zur Nachreaktion bei 75 °C weitergerührt, wobei der pH-Wert auf ca. 7,0 abfällt.

Anschließend wird das Produkt über eine Filternutsche abgesaugt, mit vollentsalztem Wasser salzfrei gewaschen und ca. 16 h bei 140 °C getrocknet.

### Beispiel 7

100 g Iriodin® 225 Rutil Perlblau (mit Titandioxid beschichtetes Glimmerpigment der E. Merck, Darmstadt) werden in 900 ml vollentsalztem Wasser suspendiert und unter kräftigem Rühren auf 40 °C aufgeheizt. Bis zur Zugabe der Kupplungsreagentien wird gemäß Beispiel 1 weitergearbeitet.

Dann werden 14,8 g Manchem A (Amino-Zirkonaluminat-Lösung der Rhône-Poulenc Chemicals) pur, innerhalb 10 min zugegeben. Der pH-Wert 3,3 blieb dabei konstant.

Nach beendeter Zugabe wird 2 h bei 75 °C nachgerührt. Dabei wird das Zirkon-Aluminat-Kupplungsreagenz vollständig hydrolysiert und reaktionsfähig. Der pH-Wert ändert sich dabei nicht.

Anschließend wird mit 2,5%iger Natronlauge, sehr langsam, innerhalb 90 min auf pH 8,0 eingestellt. Dabei werden die Metallhydroxide bzw. Metalloxidhydrate und das Zirkon-Aluminat vollständig als Mischfällung abgeschieden.

Anschließend wird noch 1 h zur Nachreaktion bei 75 °C weitergerührt, wobei der pH-Wert auf ca. 7,0 abfällt.

Anschließend wird das Produkt über eine Filternutsche abgesaugt, mit vollentsalztem Wasser salzfrei gewaschen und ca. 16 h bei 140 °C getrocknet.

### Beispiel 8

100 g Iriodin® 225 Rutil Perlblau (mit Titandioxid beschichtetes Glimmerpigment der E. Merck, Darmstadt) werden in 900 ml vollentsalztem Wasser suspendiert und unter kräftigem Rühren auf 40 °C aufgeheizt. Bis zur Zugabe der Kupplungsreagentien wird gemäß Beispiel 1 weitergearbeitet.

Dann werden 14,8 g Manchem M (Methacryl-Zirkonaluminat-Lösung der Rhône-Poulenc Chemicals) pur, innerhalb 10 min zugegeben. Der pH-Wert 3,3 blieb dabei konstant.

Nach beendeter Zugabe wird 2 h bei 75 °C nachgerührt. Dabei wird das ZirkonAluminat-Kupplungsreagenz vollständig hydrolysiert und reaktionsfähig. Der pH-Wert ändert sich dabei nicht.

Anschließend wird mit 2,5%iger Natronlauge, sehr langsam, innerhalb 90 min auf pH 8,0 eingestellt. Dabei werden die Metallhydroxide bzw. Metalloxidhydrate und das Zirkon-Aluminat vollständig als Mischfällung abgeschieden.

Anschließend wird noch 1 h zur Nachreaktion bei 75 °C weitergerührt, wobei der pH-Wert auf ca. 7,0 abfällt.

Anschließend wird das Produkt über eine Filternutsche abgesaugt, mit vollentsalztem Wasser salzfrei gewaschen und ca. 16 h bei 140 °C getrocknet.

### Beispiel 9

100 g Iriodin® 225 Rutil Perlblau (mit Titandioxid beschichtetes Glimmerpigment der E. Merck, Darmstadt) werden in 900 ml vollentsalztem Wasser suspendiert und unter kräftigem Rühren auf 40 °C aufgeheizt. Bis zur Zugabe der Kupplungsreagentien wird gemäß Beispiel 1 weitergearbeitet.

Dann werden 3,0 g Dynasilan MEMO (3-Methacryloxypropyltrimethoxysilan der Hüls AG, Troisdorf) pur, innerhalb 10 min zugegeben. Der pH-Wert 3,3 bleibt dabei konstant.

Dann werden 3,0 g Z 6040 (3-Glycidoxypropyltrimethoxysilan der Dow Corning Chemicals) pur, innerhalb 10 min zugegeben. Der pH-Wert 3,3 bleibt dabei konstant.

Nach beendeter Zugabe wird 2 h bei 75 °C nachgerührt.Dabei werden die Silane vollständig hydrolysiert und reaktionsfähig. Der pH-Wert ändert sich dabei nicht.

Anschließend wird mit 2,5%iger Natronlauge, sehr langsam, innerhalb 90 min auf pH 8,0 eingestellt. Dabei werden die Metallhydroxide bzw. Metalloxidhydrate und die Silane vollständig als Mischfällung abgeschieden.

Anschließend wird noch 1 h zur Nachreaktion bei 75 °C weitergerührt, wobei der pH-Wert auf ca. 7,0 abfällt.

Anschließend wird das Produkt über eine Filternutsche abgesaugt, mit vollentsalztem Wasser salzfrei gewaschen und ca. 16 h bei 140 °C getrocknet.

### Beispiel 10

100 g Iriodin® 225 Rutil Perlblau (mit Titandioxid beschichtetes Glimmerpigment der E. Merck, Darmstadt) werden in 900 ml vollentsalztem Wasser suspendiert und unter kräftigem Rühren auf 40 °C aufgeheizt. Bis zur Zugabe der Kupplungsreagentien wird gemäß Beispiel 1 weitergearbeitet.

Dann werden 3,0 g Dynasilan AMMO (3-Aminopropyltrimethoxysilan der Hüls AG, Troisdorf) pur, innerhalb 10 min zugegeben. Der pH-Wert 3,3 wird dabei durch 2,5%ige Salzsäure konstant gehalten.

Weiterhin werden 3,0 g Dynasilan MEMO (3-Methacryloxypropyltrimethoxysilan der Hüls AG, Troisdorf) pur, innerhalb 10 min zugegeben. Der pH-Wert 3,3 bleibt dabei konstant.

Anschließend werden 3,0 g Z 6040 (3-Glycidoxypropyltrimethoxysilan der Dow Corning Chemicals) pur, innerhalb 10 min zugegeben. Der pH-Wert 3,3 bleibt dabei konstant.

Nach beendeter Zugabe wird 2 h bei 75 °C nachgerührt. Dabei werden die Silane vollständig hydrolysiert und reaktionsfähig. Der pH-Wert ändert sich dabei nicht.

Anschließend wird mit 2,5%iger Natronlauge, sehr langsam, innerhalb 60 min auf pH 8,0 eingestellt. Dabei werden die Metallhydroxide bzw. Metalloxidhydrate und die Silane vollständig als Mischfällung abgeschieden.

Anschließend wird noch 1 h zur Nachreaktion bei 75 °C weitergerührt, wobei der pH-Wert auf ca. 7,0 abfällt.

Anschließend wird das Produkt über eine Filternutsche abgesaugt, mit vollentsalztem Wasser salzfrei gewaschen und ca. 16 h bei 140 °C getrocknet.

### Beispiel 11

100 g Iriodin® 225 Rutil Perlblau (mit Titandioxid beschichtetes Glimmerpigment der E. Merck, Darmstadt) werden in 900 ml vollentsalztem Wasser suspendiert und unter kräftigem Rühren auf 40 °C aufgeheizt. Bis zur Zugabe der Kupplungsreagentien wird gemäß Beispiel 1 weitergearbeitet.

Dann werden 3,0 g Dynasilan AMMO (3-Aminopropyltrimethoxysilan der Hüls AG, Troisdorf) pur, innerhalb 10 min zugegeben. Der pH-Wert 3,3 wird dabei durch 2,5%ige Salzsäure konstant gehalten.

Anschließend werden 3,0 g Dynasilan MEMO (3-Methacryloxypropyltrimethoxysilan der Hüls AG, Troisdorf) pur, innerhalb 10 min zugegeben. Der pH-Wert 3,3 bleibt dabei konstant.

Nach beendeter Zugabe wird 2 h bei 75 °C nachgerührt.

Dabei werden die Silane vollständig hydrolysiert und reaktionsfähig. Der pH-Wert ändert sich dabei nicht.

Anschließend wird mit 2,5%iger Natronlauge, sehr langsam, innerhalb 60 min auf pH 8,0 eingestellt. Dabei werden die Metallhydroxide bzw. Metalloxidhydrate und die Silane vollständig als Mischfällung abgeschieden.

Anschließend wird noch 1 h zur Nachreaktion bei 75 °C weitergerührt, wobei der pH-Wert auf ca. 7,0 abfällt.

Anschließend wird das Produkt über eine Filternutsche abgesaugt, mit vollentsalztem Wasser salzfrei gewaschen und ca. 16 h bei 140 °C getrocknet.

### Beispiel 12

100 g Iriodin® 225 Rutil Perlblau (mit Titandioxid beschichtetes Glimmerpigment der E. Merck, Darmstadt) werden in 900 ml vollentsalztem Wasser suspendiert und unter kräftigem Rühren auf 40 °C aufgeheizt. Bis zur Zugabe der Kupplungsreagentien wird gemäß Beispiel 1 weitergearbeitet.

Dann werden 3,0 g Dynasilan AMMO (3-Aminopropyltrimethoxysilan der Hüls AG, Troisdorf) pur, innerhalb 10 min zugegeben. Der pH-Wert 3,3 wird dabei durch 2,5%ige Salzsäure konstant gehalten.

Anschließend werden 3,0 g Z 6040 (3-Glycidoxypropyltrimethoxysilan der Dow Corning Chemicals) pur, innerhalb 10 min zugegeben. Der pH-Wert 3,3 bleibt dabei konstant.

Nach beendeter Zugabe wird 2 h bei 75 °C nachgerührt. Dabei werden die Silane vollständig hydrolysiert und reaktionsfähig. Der pH-Wert ändert sich dabei nicht.

Anschließend wird mit 2,5%iger Natronlauge, sehr langsam, innerhalb 60 min auf pH 8,0 eingestellt. Dabei werden die Metallhydroxide bzw. Metalloxidhydrate und die Silane vollständig als Mischfällung abgeschieden.

Anschließend wird noch 1h zur Nachreaktion bei 75 °C weitergerührt, wobei der pH-Wert auf ca. 7,0 abfällt.

Anschließend wird das Produkt über eine Filternutsche abgesaugt, mit vollentsalztem Wasser salzfrei gewaschen und ca. 16 h bei 140 °C getrocknet.

### Beispiel 13

100 g Iriodin® 225 Rutil Perlblau (mit Titandioxid beschichtetes Glimmerpigment der E. Merck, Darmstadt) werden in 900 ml vollentsalztem Wasser suspendiert und unter kräftigem Rühren auf 40 °C aufgeheizt. Bis zur Zugabe der Kupplungsreagentien wird gemäß Beispiel 1 weitergearbeitet.

Dann werden 3,5 g Z 6020 (N2-Aminoethyl-3-aminopropyltrimethoxysilan der Dow Corning Chemicals) pur, innerhalb 10 min zugegeben. Der pH-Wert 3,3 wird dabei durch 2,5%ige Salzsäure konstant gehalten.

Weiterhin werden 3,0 g Dynasilan MEMO (3-Methacryloxypropyltrimethoxysilan der Hüls AG, Troisdorf) pur, innerhalb 10 min zugegeben. Der pH-Wert 3,3 bleibt dabei konstant.

Anschließend werden 3,0 g Z 6040 (3-Glycidoxypropyltrimethoxysilan der Dow Corning Chemicals) pur, innerhalb 10 min zugegeben. Der pH-Wert 3,3 bleibt dabei konstant.

Nach beendeter Zugabe wird 2 h bei 75 °C nachgerührt. Dabei werden die Silane vollständig hydrolysiert und reaktionsfähig. Der pH-Wert ändert sich dabei nicht.

Anschließend wird mit 2,5%iger Natronlauge, sehr langsam, innerhalb 60 min auf pH 8,0 eingestellt. Dabei werden die Metallhydroxide bzw. Metalloxidhydrate und die Silane vollständig als Mischfällung abgeschieden.

Anschließend wird noch 1 h zur Nachreaktion bei 75 °C weitergerührt, wobei der pH-Wert auf ca. 7,0 abfällt.

Anschließend wird das Produkt über eine Filternutsche abgesaugt, mit vollentsalztem Wasser salzfrei gewaschen und ca. 16 h bei 140 °C getrocknet.

### Beispiel 14

100 g Iriodin® 504 Rot (mit Eisen(III)oxid beschichtetes Glimmerpigment der E. Merck, Darmstadt) werden in 900 ml vollentsalztem Wasser suspendiert und unter kräftigem Rühren auf 40 °C aufgeheizt.

Mit 2,5%iger Natronlauge wird ein pH-Wert von 9,0 eingestellt. Alle angegebenen pH-Werte werden mit Hilfe von geeignetem pH-Indikatorpapier bestimmt.

Anschließend läßt man innerhalb von 30 min eine Lösung von 5,4 ml Natronwasserglas (370 g SiO₂ pro Liter) in 150 ml vollentsalztes Wasser zur Pigmentsuspension tropfen. Der pH-Wert wird dabei mit 2,5%iger Salzsäure konstant gehalten. Nach beendeter Zugabe wird 15 min bei 40 °C nachgerührt. Anschließend wird innerhalb 10 min mit 2,5%iger Salzsäure auf pH 6,5 eingestellt und 15 min bei 40 °C nachgerührt. Nun werden 2,70 g Natriumsulfat, 4,60 g Aluminiumchlorid-Hexahydrat und 1,10 g Cer(III)chlorid-Heptahydrat als Feststoffe in die Pigmentsuspension zugegeben, wobei der pH-Wert auf 4,0 abfällt.

Anschließend wird innerhalb ca. 20 min auf 75 °C aufgeheizt, und weitere 75 min bei 75 °C gerührt, wobei der pH-Wert auf 3,3 abfällt. Dabei werden die Metallhydroxide bzw. Metallhydrate, wenigstens zum Teil, abgeschieden.

Nun werden 3,0 g Dynasilan AMMO (3-Aminopropyltrimethoxysilan der Hüls AG, Troisdorf) pur, innerhalb 10 min zugegeben. Der pH-Wert 3,3 wird dabei durch 2,5%ige Salzsäure konstant gehalten. Nach beendeter Zugabe wird 2 h bei 75 °C nachgerührt. Dabei wird das Silan vollständig hydrolysiert und reaktionsfähig. Der pH-Wert ändert sich dabei nicht.

Anschließend wird mit 2,5%iger Natronlauge, sehr langsam, innerhalb 60 min auf pH 8,0 eingestellt. Dabei werden die Metallhydroxide bzw. Metalloxidhydrate und das Silan vollständig als Mischfällung abgeschieden.

Anschließend wird noch 1 h zur Nachreaktion bei 75 °C weitergerührt, wobei der pH-Wert auf ca. 7,0 abfällt.

Anschließend wird das Produkt über eine Filternutsche abgesaugt, mit vollentsalztem Wasser salzfrei gewaschen und ca. 16 h bei 140 °C getrocknet.

### Beispiel 15

100 g Iriodin® 504 Rot (mit Eisen(III)oxid beschichtetes Glimmerpigment der E. Merck, Darmstadt) werden in 900 ml vollentsalztem Wasser suspendiert und unter kräftigem Rühren auf 40 °C aufgeheizt.

Mit 2,5%iger Natronlauge wird ein pH-Wert von 9,0 eingestellt. Alle angegebenen pH-Werte werden mit Hilfe von geeignetem pH-Indikatorpapier bestimmt.

Anschließend läßt man innerhalb von 30 min eine Lösung von 8,1 ml Natronwasserglas (370g SiO₂ pro Liter) in 150 ml vollentsalztes Wasser zur Pigmentsuspension tropfen. Der pH-Wert wird dabei mit 2,5%iger Salzsäure konstant gehalten. Nach beendeter Zugabe wird 15 min bei 40 °C nachgerührt. Anschließend wird innerhalb 10 min mit 2,5%iger Salzsäure auf pH 6,5 eingestellt und 15 min bei 40 °C nachgerührt. Nun werden 4,05 g Natriumsulfat, 6,90 g Aluminiumchlorid-Hexahydrat und 1,10 g Cer(III)chlorid-Heptahydrat als Feststoffe in die Pigmentsuspension zugegeben, wobei der pH-Wert auf 4,0 abfällt.

Anschließend wird innerhalb ca. 20 min auf 75 °C aufgeheizt, und weitere 75 min bei 75 °C gerührt, wobei der pH-Wert auf 3,3 abfällt. Dabei werden die Metallhydroxide bzw. Metallhydrate, wenigstens zum Teil, abgeschieden.

Nun werden 3,0 g Dynasilan AMMO (3-Aminopropyltrimethoxysilan der Hüls AG, Troisdorf) pur, innerhalb 10 min zugegeben. Der pH-Wert 3,3 wird dabei durch 2,5%ige Salzsäure konstant gehalten. Nach beendeter Zugabe wird 2 h bei 75 °C nachgerührt. Dabei wird das Silan vollständig hydrolysiert und reaktionsfähig. Der pH-Wert ändert sich dabei nicht.

Anschließend wird mit 2,5%iger Natronlauge, sehr langsam, innerhalb 60 min auf pH 8,0 eingestellt. Dabei werden die Metallhydroxide bzw. Metalloxidhydrate und das Silan vollständig als Mischfällung abgeschieden.

Anschließend wird noch 1 h zur Nachreaktion bei 75 °C weitergerührt, wobei der pH-Wert auf ca. 7,0 abfällt.

Anschließend wird das Produkt über eine Filternutsche abgesaugt, mit vollentsalztem Wasser salzfrei gewaschen und ca. 16 h bei 140 °C getrocknet.

### Beispiel 16

100 g Iriodin® 225 Rutil Perlblau (mit Titandioxid beschichtetes Glimmerpigment der E. Merck, Darmstadt) werden in 900 ml vollentsalztem Wasser suspendiert und unter kräftigem Rühren auf 40 °C aufgeheizt.

Mit 2,5%iger Natronlauge wird ein pH-Wert von 9,0 eingestellt. Alle angegebenen pH-Werte werden mit Hilfe von geeignetem pH-Indikatorpapier bestimmt.

Anschließend läßt man innerhalb von 30 min eine Lösung von 2,7 ml Natronwasserglas (370 g SiO₂ pro Liter) in 150 ml vollentsalztes Wasser zur Pigmentsuspension tropfen. Der pH-Wert wird dabei mit 2,5%iger Salzsäure konstant gehalten. Nach beendeter Zugabe wird 15 min bei 40 °C nachgerührt. Anschließend wird innerhalb 10 min mit 2,5%iger Salzsäure auf pH 6,5 eingestellt und 15 min bei 40 °C nachgerührt. Nun werden 1,35 g Natriumsulfat, 2,30 g Aluminiumchlorid-Hexahydrat und 1,70 g Cer(III)chlorid-Heptahydrat als Feststoffe in die Pigmentsuspension zugegeben, wobei der pH-Wert auf 4,0 abfällt.

Anschließend wird innerhalb ca. 20 min auf 75 °C aufgeheizt, und weitere 75 min bei 75 °C gerührt, wobei der pH-Wert auf 3,3 abfällt. Dabei werden die Metallhydroxide bzw. Metallhydrate, wenigstens zum Teil, abgeschieden.

Nun werden 3,0 g Dynasilan MEMO (3-Methacryloxypropyltrimethoxysilan der Hüls AG, Troisdorf) pur, innerhalb 10 min zugegeben. Der pH-Wert 3,3 bleibt dabei konstant. Nach beendeter Zugabe wird 2 h bei 75 °C nachgerührt. Dabei wird das Silan vollständig hydrolysiert und reaktionsfähig. Der pH-Wert ändert sich dabei nicht.

Anschließend wird mit 2,5%iger Natronlauge, sehr langsam, innerhalb 60 min auf pH 8,0 eingestellt. Dabei werden die Metallhydroxide bzw. Metalloxidhydrate und das Silan vollständig als Mischfällung abgeschieden.

Anschließend wird noch 1 h zur Nachreaktion bei 75 °C weitergerührt, wobei der pH-Wert auf ca. 7,0 abfällt.

Anschließend wird das Produkt über eine Filternutsche abgesaugt, mit vollentsalztem Wasser salzfrei gewaschen und ca. 16 h bei 140 °C getrocknet.

### Beispiel 17

100 g Iriodin® 225 Rutil Perlblau (mit Titandioxid beschichtetes Glimmerpigment der E. Merck, Darmstadt) werden in 900 ml vollentsalztem Wasser suspendiert und unter kräftigem Rühren auf 40 °C aufgeheizt.

Mit 2,5%iger Natronlauge wird ein pH-Wert von 9,0 eingestellt. Alle angegebenen pH-Werte werden mit Hilfe von geeignetem pH-Indikatorpapier bestimmt.

Anschließend läßt man innerhalb von 30 min eine Lösung von 2,7 ml Natronwasserglas (370g SiO₂ pro Liter) in 150 ml vollentsalztes Wasser zur Pigmentsuspension tropfen. Der pH-Wert wird dabei mit 2,5%iger Salzsäure konstant gehalten. Nach beendeter Zugabe wird 15 min bei 40 °C nachgerührt. Anschließend wird innerhalb 10 min mit 2,5%iger Salzsäure auf pH 6,5 eingestellt und 15 min bei 40 °C nachgerührt. Nun werden 1,35 g Natriumsulfat, 2,30 g Aluminiumchlorid-Hexahydrat und 2,25 g Cer(III)chlorid-Heptahydrat als Feststoffe in die Pigmentsuspension zugegeben, wobei der pH-Wert auf 4,0 abfällt.

Anschließend wird innerhalb ca. 20 min auf 75 °C aufgeheizt, und weitere 75 min bei 75 °C gerührt, wobei der pH-Wert auf 3,3 abfällt. Dabei werden die Metallhydroxide bzw. Metallhydrate, wenigstens zum Teil, abgeschieden.

Nun werden 3,0 g Dynasilan MEMO (3-Methacryloxypropyltrimethoxysilan der Hüls AG, Troisdorf) pur, innerhalb 10 min zugegeben. Der pH-Wert 3,3 bleibt dabei konstant. Nach beendeter Zugabe wird 2 h bei 75 °C nachgerührt. Dabei wird das Silan vollständig hydrolysiert und reaktionsfähig. Der pH-Wert ändert sich dabei nicht.

Anschließend wird mit 2,5%iger Natronlauge, sehr langsam, innerhalb 60 min auf pH 8,0 eingestellt. Dabei werden die Metallhydroxide bzw. Metalloxidhydrate und das Silan vollständig als Mischfällung abgeschieden.

Anschließend wird noch 1 h zur Nachreaktion bei 75 °C weitergerührt, wobei der pH-Wert auf ca. 7,0 abfällt.

Anschließend wird das Produkt über eine Filternutsche abgesaugt, mit vollentsalztem Wasser salzfrei gewaschen und ca. 16 h bei 140 °C getrocknet.

### Beispiel 18

100 g Iriodin® 225 Rutil Perlblau (mit Titandioxid beschichtetes Glimmerpigment der E. Merck, Darmstadt) werden in 900 ml vollentsalztem Wasser suspendiert und unter kräftigem Rühren auf 40 °C aufgeheizt.

Mit 2,5%iger Natronlauge wird ein pH-Wert von 9,0 eingestellt. Alle angegebenen pH-Werte werden mit Hilfe von geeignetem pH-Indikatorpapier bestimmt.

Anschließend läßt man innerhalb von 30 min eine Lösung von 2,7 ml Natronwasserglas (370g SiO₂ pro Liter) in 150 ml vollentsalztes Wasser zur Pigmentsuspension tropfen. Der pH-Wert wird dabei mit 2,5%iger Salzsäure konstant gehalten. Nach beendeter Zugabe wird 15 min bei 40 °C nachgerührt. Anschließend wird innerhalb 10 min mit 2,5%iger Salzsäure auf pH 6,5 eingestellt und 15 min bei 40 °C nachgerührt.

Anschließend laßt man innerhalb von 15 min eine Lösung von 1,35 g Natriumsulfat, 2,30 g Aluminiumchlorid-Hexahydrat und 1,10 g Cer(III)chlorid-Heptahydrat, 2,62 g Zirkon(IV)oxidchlorid-Octahydrat und 2 ml 10%ige Salzsäure, gelöst in 100 ml vollentsalztem Wasser zur Pigmentsuspension tropfen, wobei der pH auf 2,5 abfällt.

Anschließend wird innerhalb ca. 20 min auf 75 °C aufgeheizt, und weitere 75 min bei 75 °C gerührt, wobei der pH-Wert auf 2,3 abfällt. Dabei werden die Metallhydroxide bzw. Metallhydrate, wenigstens zum Teil, abgeschieden.

Nun läßt man innerhalb von 15 min eine Lösung von 3,0 g Dynasilan AMMO (3-Aminopropyltrimethoxysilan der Hüls AG, Troisdorf) gelöst in 200 ml vollentsalztem Wasser (= vollständige Silan-Hydrolyse) zur Pigmentsuspension tropfen, wobei der pH-Wert auf 3,9 ansteigt.

Nach beendeter Zugabe wird 2 h bei 75 °C nachgerührt. Der pH-Wert fällt dabei auf 3,6.

Anschließend wird mit 2,5%iger Natronlauge, sehr langsam, innerhalb 60 min auf pH 8,0 eingestellt. Dabei werden die Metallhydroxide bzw. Metalloxidhydrate und das Silan vollständig als Mischfällung abgeschieden.

Anschließend wird noch 1 h zur Nachreaktion bei 75 °C weitergerührt, wobei der pH-Wert auf ca. 7,0 abfällt.

Anschließend wird das Produkt über eine Filternutsche abgesaugt, mit vollentsalztem Wasser salzfrei gewaschen und ca. 16 h bei 140 °C getrocknet.

### Beispiel 19

100 g Iriodin® 225 Rutil Perlblau (mit Titandioxid beschichtetes Glimmerpigment der E. Merck, Darmstadt) werden in 900 ml vollentsalztem Wasser suspendiert und unter kräftigem Rühren auf 40 °C aufgeheizt.

Mit 2,5%iger Natronlauge wird ein pH-Wert von 9,0 eingestellt. Alle angegebenen pH-Werte werden mit Hilfe von geeignetem pH-Indikatorpapier bestimmt.

Anschließend läßt man innerhalb von 30 min eine Lösung von 2,7 ml Natronwasserglas (370 g SiO₂ pro Liter) in 150 ml vollentsalztes Wasser zur Pigmentsuspension tropfen. Der pH-Wert wird dabei mit 2,5%iger Salzsäure konstant gehalten. Nach beendeter Zugabe wird 15 min bei 40 °C nachgerührt. Anschließend wird innerhalb 10 min mit 2,5%iger Salzsäure auf pH 6,5 eingestellt und 15 min bei 40 °C nachgerührt.

Anschließend laßt man innerhalb von 15 min eine Lösung von 1,35 g Natriumsulfat, 2,30 g Aluminiumchlorid-Hexahydrat und 1,10 g Cer(III)chlorid-Heptahydrat, 2,62 g Zirkon(IV)oxidchlorid-Octahydrat und 2 ml 10%ige Salzsäure, gelöst in 100 ml vollentsalztem Wasser zur Pigmentsuspension tropfen, wobei der pH auf 2,5 abfällt.

Anschließend wird innerhalb ca. 20 min auf 75 °C aufgeheizt, und weitere 75 min bei 75 °C gerührt, wobei der pH-Wert auf 2,3 abfällt. Dabei werden die Metallhydroxide bzw. Metallhydrate, wenigstens zum Teil, abgeschieden.

Anschließend wird mit 2,5%iger Natronlauge, sehr langsam, innerhalb 20 min auf pH 3,0 eingestellt(= Vor-Neutralisation).

Nun läßt man innerhalb von 15 min eine Lösung von 3,0 g Dynasilan AMMO (3-Aminopropyltrimethoxysilan der Hüls AG, Troisdorf) gelöst in 200 ml vollentsalztem Wasser (= vollständige Silan-Hydrolyse) zur Pigmentsuspension tropfen, wobei der pH-Wert auf 4,2 ansteigt.

Nach beendeter Zugabe wird 2 h bei 75 °C nachgerührt. Der pH-Wert fällt dabei auf 3,6.

Anschließend wird mit 2,5%iger Natronlauge, sehr langsam, innerhalb 40 min auf pH 8,0 eingestellt. Dabei werden die Metallhydroxide bzw. Metalloxidhydrate und das Silan vollständig als Mischfällung abgeschieden.

Anschließend wird noch 1h zur Nachreaktion bei 75 °C weitergerührt, wobei der pH-Wert auf ca. 7,0 abfällt.

Anschließend wird das Produkt über eine Filternutsche abgesaugt, mit vollentsalztem Wasser salzfrei gewaschen und ca. 16 h bei 140 °C getrocknet.

### Beispiel 20

100 g Iriodin® 225 Rutil Perlblau (mit Titandioxid beschichtetes Glimmerpigment der E. Merck, Darmstadt) werden in 900 ml vollentsalztem Wasser suspendiert und unter kräftigem Rühren auf 40 °C aufgeheizt.

Mit 2,5%iger Natronlauge wird ein pH-Wert von 9,0 eingestellt. Alle angegebenen pH-Werte werden mit Hilfe von geeignetem pH-Indikatorpapier bestimmt.

Anschließend läßt man innerhalb von 30 min eine Lösung von 2,7 ml Natronwasserglas (370 g SiO₂ pro Liter) in 150 ml vollentsalztes Wasser zur Pigmentsuspension tropfen. Der pH-Wert wird dabei mit 2,5%iger Salzsäure konstant gehalten. Nach beendeter Zugabe wird 15 min bei 40 °C nachgerührt. Anschließend wird innerhalb 10 min mit 2,5%iger Salzsäure auf pH 6,5 eingestellt und 15 min bei 40 °C nachgerührt.

Anschließend laßt man innerhalb von 15 min eine Lösung von 1,35 g Natriumsulfat, 2,30 g Aluminiumchlorid-Hexahydrat und 1,10 g Cer(III)chlorid-Heptahydrat, 2,62 g Zirkon(IV)oxidchlorid-Octahydrat und 2 ml 10%ige Salzsäure, gelöst in 100 ml vollentsalztem Wasser zur Pigmentsuspension tropfen, wobei der pH auf 2,5 abfällt.

Anschließend wird innerhalb ca. 20 min auf 75 °C aufgeheizt, und weitere 75 min bei 75 °C gerührt, wobei der pH-Wert auf 2,3 abfällt. Dabei werden die Metallhydroxide bzw. Metallhydrate, wenigstens zum Teil, abgeschieden.

Anschließend wird mit 2,5%iger Natronlauge, sehr langsam, innerhalb ca. 35 min auf pH 4,0 eingestellt (= Vor-Neutralisation).

Nun läßt man innerhalb von 15 min eine Lösung von 3,0 g Dynasilan AMMO (3-Aminopropyltrimethoxysilan der Hüls AG, Troisdorf) gelöst in 200 ml vollentsalztem Wasser (= vollständige Silan-Hydrolyse) zur Pigmentsuspension tropfen, wobei der pH-Wert auf 4,8 ansteigt.

Nach beendeter Zugabe wird 2 h bei 75 °C nachgerührt. Der pH-Wert fällt dabei auf 4,6.

Anschließend wird mit 2,5%iger Natronlauge, sehr langsam, innerhalb 25 min auf pH 8,0 eingestellt. Dabei werden die Metallhydroxide bzw. Metalloxidhydrate und das Silan vollständig als Mischfällung abgeschieden.

Anschließend wird noch 1 h zur Nachreaktion bei 75 °C weitergerührt, wobei der pH-Wert auf ca. 7,0 abfällt.

Anschließend wird das Produkt über eine Filternutsche abgesaugt, mit vollentsalztem Wasser salzfrei gewaschen und ca. 16 h bei 140 °C getrocknet.

## Patentansprüche

1. Perlglanzpigment auf der Basis eines mit Metalloxiden beschichteten, plättchenförmigen Substrates und einer auf der Metalloxidschicht befindlichen Deckschicht, dadurch gekennzeichnet, daß die Deckschicht eine mehrschichtige Struktur besitzt, die aus einer ersten Schicht aus Siliciumdioxid, einer zweiten Schicht aus mindestens einem Hydroxid bzw. Oxidhydrat der Elemente Cer, Aluminium oder Zirkon und einer dritten äußersten Schicht aus mindestens einem Hydroxid bzw. Oxidhydrat der Elemente Cer, Aluminium oder Zirkon und einem organischen Kupplungsreagenz besteht.

2. Perlglanzpigment nach Anspruch 1, dadurch gekennzeichnet, daß das Kupplungsreagenz ein Zirkonaluminat, ein Metallsäureester oder ein organofunktionelles Silan ist.

3. Verfahren zur Herstellung eines Perlglanzpigmentes nach Anspruch 1 auf der Basis eines mit Metalloxiden beschichteten, plättchenförmigen Substrates und einer auf der Metalloxidschicht befindlichen Deckschicht, dadurch gekennzeichnet, daß man das mit Metalloxiden beschichtete Substrat in Wasser suspendiert, in einer ersten Stufe durch Zusatz eines wasserlöslichen Silicats im pH-Bereich von 6-9 Kieselsäure abscheidet, anschließend in einer zweiten Stufe nach Zusatz eines oder mehrerer wasserlöslicher Metallsalze im pH-Bereich von 3 bis 7 und Erhitzen auf 30 bis 100 °C, vorzugsweise 40 bis 75 °C, die Metallhydroxide bzw. Metalloxidhydrate zum Teil abscheidet, in einer dritten Stufe mindestens ein Kupplungsreagenz zusetzt und dieses bei einem pH-Bereich von 3 bis 4 hydrolysiert und schließlich in einer vierten Stufe bei einem pH-Wert von 4 bis 8,5 den noch in Lösung verbliebenen Teil der Metalle als Hydroxide bzw. Oxidhydrate zusammen mit dem Kupplungsreagenz abscheidet und anschließend das Pigment bei 80 bis 160 °C, vorzugsweise bei 120 bis 160 °C, trocknet.

4. Verfahren nach Anspruch 3, dadurch gekennzeichnet, daß das Metallhydroxid bzw. Metalloxidhydrat ein Hydroxid bzw. Oxidhydrat von Aluminium, Cer und Zirkon ist.

5. Verfahren nach einem der Ansprüche 3 und 4, dadurch gekennzeichnet, daß das Kupplungsreagenz ein Zirkonaluminat, ein Metallsäureester oder ein organofunktionelles Silan ist.

6. Verwendung des Perlglanzpigmentes nach den Ansprüchen 1 bis 5 zur Pigmentierung von Lacken, Farben, Kunststoffen und Coatings.

7. Lacke, Farben, Kunststoffe und Coatings, die mit einem Perlglanzpigment nach den Ansprüchen 1 bis 5 pigmentiert sind.

## Claims

1. Pearl lustre pigment based on a platelet-shaped substrate coated with metal oxides and on a top layer which is located on the metal oxide layer, characterized in that the top layer possesses a multilayer structure which consists of a first layer of silica, a second layer of at least one hydroxide or oxide hydrate of the elements cerium, aluminium or zirconium and a third, outermost layer of at least one hydroxide or oxide hydrate of the elements cerium, aluminium or zirconium and an organic coupling reagent.

2. Pearl lustre pigment according to Claim 1, characterized in that the coupling reagent is a zirconium aluminate, a metal acid ester or an organofunctional silane.

3. Process for preparing a pearl lustre pigment according to Claim 1 based on a platelet-shaped substrate coated with metal oxides and on a top layer which is located on the metal oxide layer, characterized in that the substrate coated with metal oxides is suspended in water, silica is deposited in a first stage by adding a water-soluble silicate in the pH range of 6-9, subsequently in a second stage, following the addition of one or more water-soluble metal salts in the pH range of 3 to 7 and heating at from 30 to 100°C, preferably from 40 to 75°C, some of the metal hydroxides and/or metal oxide hydrates are deposited, in a third stage at least one coupling reagent is added and is hydrolysed in a pH range of 3-4, and finally, in a fourth stage at a pH of 4 to 8.5, the remainder of the metals, still in solution, are deposited as hydroxides and/or oxide hydrates together with the coupling reagent, and the pigment is then dried at from 80 to 160°C, preferably from 120 to 160°C.

4. Process according to Claim 3, characterized in that the metal hydroxide or metal oxide hydrate is a hydroxide or oxide hydrate, respectively, of aluminium, cerium or zirconium.

5. Process according to one of Claims 3 and 4, characterized in that the coupling reagent is a zirconium aluminate, a metal acid ester or an organofunctional silane.

6. Use of the pearl lustre pigment according to Claims 1 to 5 for pigmenting paints, inks, plastics and coatings.

7. Paints, inks, plastics and coatings pigmented with a pearl lustre pigment according to Claims 1 to 5.

## Revendications

1. Pigment nacré à base d'un substrat en paillettes enrobé d'oxydes métalliques et d'une couche de recouvrement se trouvant sur la couche d'oxydes métalliques, caractérisé en ce que la couche de recouvrement a une structure multicouche, qui consiste en une première couche de dioxyde de silicium, une deuxième couche d'au moins un hydroxyde ou hydrate des éléments cérium, aluminium ou zirconium, et une troisième couche externe d'au moins un hydroxyde ou hydrate des éléments cérium, aluminium ou zirconium et d'un réactif organique de couplage.

2. Pigment nacré selon la revendication 1, caractérisé en ce que le réactif de couplage est un aluminate de zirconium, un ester d'acide métallique ou un silane organofonctionnel.

3. Procédé pour la préparation d'un pigment nacré selon la revendication 1, à base d'un substrat en paillettes enrobé d'oxydes métalliques et d'une couche de recouvrement se trouvant sur la couche d'oxydes métalliques, caractérisé en ce que l'on met en suspension dans de l'eau le substrat enrobé d'oxydes métalliques, dans une première étape de la silice se dépose dans l'intervalle de pH de 6-9 par addition d'un silicate soluble dans l'eau, et ensuite, dans une deuxième étape, les hydroxydes de métaux ou hydrates de métaux se déposent en partie, après addition d'un ou plusieurs sels métalliques solubles dans l'eau, dans l'intervalle de pH allant de 3 à 7, et avec chauffage à 30-100°C, de préférence à 40-75°C, dans une troisième étape on ajoute au moins un réactif de couplage et celui-ci est hydrolysé dans un intervalle de pH de 3 à 4, et enfin, dans une quatrième étape, la fraction des métaux restant encore en solution se dépose sous forme d'hydroxydes ou d'hydrates, conjointement avec le réactif de couplage, à un pH de 4 à 8,5, et le pigment est ensuite séché à 80-160°C, de préférence à 120-160°C.

4. Procédé selon la revendication 3, caractérisé en ce que l'hydroxyde de métal ou l'hydrate de métal est un hydroxyde ou hydrate d'aluminium, de cérium ou de zirconium.

5. Procédé selon la revendication 3 ou 4, caractérisé en ce que le réactif de couplage est un aluminate de zirconium, un ester d'acide métallique ou un silane organofonctionnel.

6. Utilisation du pigment nacré selon les revendications 1 à 5, pour la pigmentation de peintures et vernis, couleurs, matières plastiques et revêtements.

7. Peintures et vernis, couleurs, matières plastiques et revêtements qui sont pigmentés par un pigment nacré selon les revendications 1 à 5.
